# EUROPEAN PATENT APPLICATION

(11) **EP 3 136 538 A1**
(43) Date of publication of application: **01.03.2017**
(21) Application number: 15182112.1
(22) Date of filing: 24.08.2015
(51) Int. Cl.: H02J 7/00, H02J 7/34, H02M 3/158, H02J 1/10

(54) **AN INTERMEDIATE CIRCUIT SYSTEM**

(71) Applicant: Visedo Oy, 53600 Lappeenranta (FI)
(72) Inventor: RAUMA, Kimmo, 53850 Lappeenranta (FI); JÄRVELÄINEN, Tero, 53850 Lappeenranta (FI)
(74) Representative: Berggren Oy, Helsinki & Oulu

(57) **Abstract**

An intermediate circuit system comprises a first capacitor system (102) between a first pole (105) and a second pole (106), a second capacitor system (103) between a third pole (107) and the second pole, and a coupling circuit (104) between the first and third poles. The coupling circuit comprises an inductive element (108), a controllable switch (109) between a first end of the inductive element and the first pole, and another controllable switch (110) between the second end of the inductive element and the third pole. The coupling circuit further comprises a switching component (111) for conducting current from the second pole to the first end of the inductive element and another switching component (112) for conducting current from the second pole to the second end of the inductive element. Thus, the coupling circuit is capable of acting as a chopper circuit between the first and second capacitor systems.

The figure proposed to be presented with the abstract: Figure 1 b.

## Description

### Field of the disclosure

The disclosure relates generally to electromechanical power transmission systems. More particularly, the invention relates to an intermediate circuit system that can be, for example but not necessarily, a part of an electromechanical power transmission system of a ship.

### Background

In many cases, an electromechanical power transmission system comprises generators driven with combustion engines, a direct voltage intermediate circuit system, and first electric equipment for transferring electrical power from the generators to the intermediate circuit system. The generators can be for example synchronous or asynchronous alternating current "AC" generators and the above-mentioned first electric equipment may comprise power electronic converters for converting the alternating voltages of the generators into direct voltage suitable for the intermediate circuit system. The intermediate circuit system comprises typically one or more capacitor systems connected between positive and negative poles of the intermediate circuit system. Each capacitor system comprises typically a plurality of series and/or parallel connected capacitor units. Furthermore, the electromechanical power transmission system comprises second electric equipment for transferring electrical power from the intermediate circuit system to power consuming electric appliances, such as for example electric motors and lighting systems. The second electric equipment may comprise for example power electronic converters for converting the direct voltage of the intermediate circuit system into voltages suitable for the power consuming electric appliances. An electromechanical power transmission system of the kind described above can be for example a part of a power system of a ship where one or more electric motors of the power system are arranged to drive one or more propellers.

The above-mentioned intermediate circuit system is typically arranged to comprise portions which are electrically separable from each other. This arrangement enables fault isolation so that a faulty portion of the power transmission system can be electrically separated from the other portions of the power transmission system. On the other hand, when there is no fault, the portions of the intermediate circuit system are advantageously electrically interconnected so as to provide more effective mutual power balancing between the power consuming electric appliances, such as for example electric motors and lighting systems. The mutual power balancing between the power consuming electric appliances is based on the improbability of simultaneous peak-loads of many power consuming electric appliances. The higher is the number of the power consuming electric appliances supplied by the electrically interconnected portions of the intermediate circuit system, the more effective is the power balancing. Therefore, the portions of the intermediate circuit system should be electrically connectable to each other and, when needed, electrically separable from each other.

### Summary

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new intermediate circuit system that can be, for example but not necessarily, a part of an electromechanical power transmission system of a ship. An intermediate circuit system according to the invention comprises:
- a first capacitor system between a first pole and a second pole,
- a second capacitor system between a third pole and the second pole, and
- a coupling circuit between the first and third poles.

The coupling circuit comprises an inductive element, a first controllable switch between a first end of the inductive element and the first pole, and a second controllable switch between the second end of the inductive element and the third pole. The coupling circuit further comprises a first switching component for conducting current from the second pole to the first end of the inductive element and a second switching component for conducting current from the second pole to the second end of the inductive element.

The above-described coupling circuit provided with the first and second controllable switches can be used for electrically interconnecting the first and second capacitor systems and for electrically disconnecting the first and second capacitor systems from each other. Furthermore, the coupling circuit can be used as a chopper circuit between the first and second capacitor systems for example in a case where there are different voltages in the first and second capacitor systems and the first and second capacitor systems are wanted to be electrically interconnected.

It is to be noted that there can be more than two capacitor systems and more than one coupling circuit. It is also possible that the capacitor systems are arranged to constitute a ring where one of the capacitor systems can be electrically disconnected from the other capacitor systems so that the other capacitor systems still remain electrically interconnected.

In an intermediate circuit system according to an advantageous and non-limiting embodiment of the invention, the above-mentioned first and second switching components are controllable switches each being controllable to conduct current to the above-mentioned second pole. In this case, the coupling circuit can be used not only as a buck chopper for transferring electrical energy from one of the above-mentioned capacitor systems having higher voltage to the other of the capacitor systems having lower voltage but also as a boost chopper for transferring electrical energy from the capacitor system having the lower voltage to the capacitor system having the higher voltage.

In accordance with the invention, there is provided also a new electromechanical power transmission system that can be, for example but not necessarily, a part of a power system of a ship. An electromechanical power transmission system according to the invention comprises, among others, an intermediate circuit system according to the invention, where each coupling circuit of the intermediate circuit system is suitable for electrically interconnecting portions of the electromechanical power transmission system and, when needed e.g. in a fault situation, for electrically disconnecting the portions of the electromechanical power transmission system from each other.

In accordance with the invention, there is provided also a new ship that comprises an electromechanical power transmission system according to the invention.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments of the invention and their advantages are explained in greater detail below in the sense of examples and with reference to the accompanying drawings, in which:

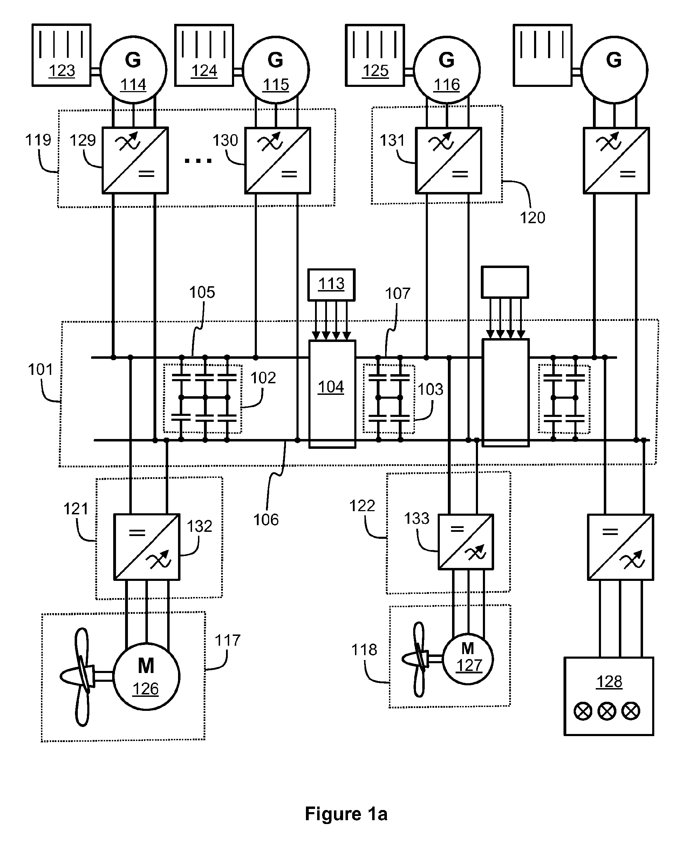

figure 1a shows a schematic illustration of an exemplifying electromechanical power transmission system that comprises an intermediate circuit system according to an exemplifying and non-limiting embodiment of the invention, and

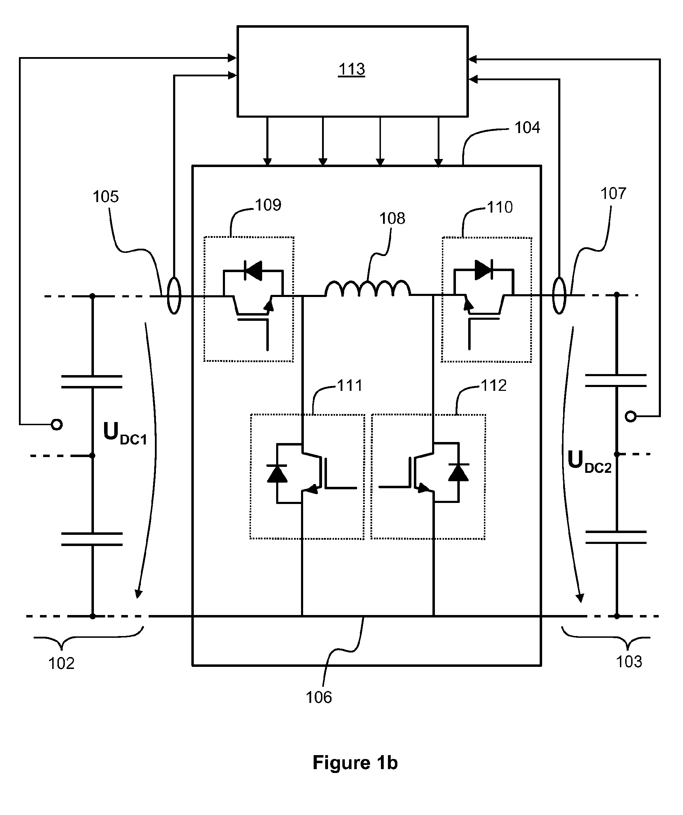

figure 1b shows a schematic illustration of a part of the intermediate circuit system illustrated in figure 1 a.

### Description of the exemplifying embodiments

The specific examples provided in the description given below should not be construed as limiting the scope and/or the applicability of the appended claims. Lists and groups of examples provided in the description given below are not exhaustive unless otherwise explicitly stated.

Figure 1a shows a schematic illustration of an exemplifying electromechanical power transmission system that comprises an intermediate circuit system 101 according to an exemplifying and non-limiting embodiment of the invention. The electromechanical power transmission system comprises first generators 114 and 115 that are driven with combustion engines 123 and 124, and a second generator 116 that is driven with a combustion engine 124. The generators can be for example synchronous generators or asynchronous generators and the combustion engines can be for example diesel engines or Otto-cycle engines. The electromechanical power transmission system comprises electric appliances to be supplied with electrical power. In this exemplifying case, first and second ones of the electric appliances 117 and 118 comprise electric motors 126 and 127 arranged to drive propellers. Furthermore, this exemplifying electromechanical power transmission system comprises means for energizing a lighting system 128. The electromechanical power transmission system comprises first electric equipment 119 for transferring electrical power from the generators 114 and 115 to the intermediate circuit system 101 via a first pole 105 and a second pole 106 of the intermediate circuit system. The electromechanical power transmission system comprises second electric equipment 120 for transferring electrical power from the generator 116 to the intermediate circuit system 101 via a third pole 107 and the second pole 106 of the intermediate circuit system. In this exemplifying case, the electric equipment 119 and the electric equipment 120 comprise power electronic converters 129, 130, and 131 for converting the alternating voltages of the generators 114, 115, and 116 into direct voltage suitable for the intermediate circuit system 101. The electromechanical power transmission system comprises third electric equipment 121 for transferring electrical power from the intermediate circuit system 101 to the electric appliance 117 via the poles 105 and 106 of the intermediate circuit system, and fourth electric equipment 122 for transferring electrical power from the intermediate circuit system to the electric appliance 118 via the poles 107 and 106 of the intermediate circuit system. In this exemplifying case, the electric equipment 121 and the electric equipment 122 comprise power electronic converters 132 and 133 for converting the direct voltage of the intermediate circuit system into voltages suitable for the electric motors 126 and 127.

The intermediate circuit system 101 comprises a first capacitor system 102 between the poles 105 and 106, and a second capacitor system 103 between the poles 107 and 106 as illustrated in figure 1a. In this exemplifying case, each capacitor system comprises a plurality of series and parallel connected capacitor units. The intermediate circuit system 101 comprises a coupling circuit 104 between the poles 105 and 107. The circuit diagram of the coupling circuit 104 is shown in figure 1 b. The coupling circuit 104 comprises an inductive element 108, a first controllable switch 109 between a first end of the inductive element and the pole 105, and a second controllable switch 110 between the second end of the inductive element and the pole 107. The inductive element 108 may comprise an inductor coil or two or more inductor coils connected in parallel and/or in series. The coupling circuit further comprises a first switching component 111 for conducting current from the pole 106 to the first end of the inductive element 108 and a second switching component 112 for conducting current from the pole 106 to the second end of the inductive element 108.

In the exemplifying coupling circuit 104, the controllable switch 109 is controllable to be unidirectionally conductive in the direction from the inductive element 108 to the pole 105 and controllable to be bi-directionally conductive in the both directions between the inductive element 108 and the pole 105. Correspondingly, the controllable switch 110 is controllable to be unidirectionally conductive in the direction from the inductive element 108 to the pole 107 and controllable to be bi-directionally conductive in the both directions between the inductive element 108 and the pole 107. In this exemplifying case, the controllable switch 109 comprises a diode having its forward direction from the inductive element 108 to the pole 105 and a controllable semiconductor component in parallel with the diode. Correspondingly, the controllable switch 110 comprises a diode having its forward direction from the inductive element 108 to the pole 107 and a controllable semiconductor component in parallel with the diode. The controllable semiconductor components of the switches 109 and 110 can be for example insulated gate bipolar transistors "IGBT", gate turn-off thyristors "GTO", bipolar transistors, or field-effect transistors.

In the exemplifying coupling circuit 104, the switching component 111 is controllable to be unidirectionally conductive in the direction from the pole 106 to the first end of the inductive element 108 and controllable to be bi-directionally conductive in the both directions between the first end of the inductive element 108 and the pole 106. Correspondingly, the switching component 112 is controllable to be unidirectionally conductive in the direction from the pole 106 to the second end of the inductive element 108 and controllable to be bi-directionally conductive in the both directions between the second end of the inductive element 108 and the pole 106. In this case, the switching component 111 comprises a diode having its forward direction from the pole 106 to the first end of the inductive element 108 and a controllable semiconductor component in parallel with the diode. Correspondingly, the switching component 112 comprises a diode having its forward direction from the pole 106 to the second end of the inductive element 108 and a controllable semiconductor component in parallel with the diode. The controllable semiconductor components of the switching components 111 and 112 can be for example insulated gate bipolar transistors "IGBT", gate turn-off thyristors "GTO", bipolar transistors, or field-effect transistors.

The intermediate circuit system comprises a controller 113 for controlling the operation of the coupling circuit 104. The operation of the coupling circuit 104 in two exemplifying situations is described below with reference to figure 1 b.

In the first exemplifying situation, the direct voltage U_{DC1} is assumed to be higher than the direct voltage U_{DC2}. Furthermore, it is assumed that there is a need to transfer electrical energy from the capacitor system 102 to the capacitor system 103. In this exemplifying situation, the switching components 111 and 112 are controlled to be unidirectionally conductive, i.e. the controllable semiconductor components of the switching components 111 and 112 are controlled to be non-conductive. The switch 109 is controlled to be in turn conductive in the direction from the pole 105 to the inductive element 108 and in turn non-conductive in the direction from the pole 105 to the inductive element. Therefore, in this exemplifying situation, the coupling circuit 104 is controlled to operate as a buck chopper that transfers electrical energy from the capacitor system 102 having the higher voltage U_{DC1} to the capacitor system 103 having the lower voltage U_{DC2}. It is worth noting that the coupling circuit 104 is capable of operating as a buck chopper also in a case where the switching components 111 and 112 are non-controllable unidirectionally conductive components, such as for example diodes, without any parallel connected controllable semiconductor components.

In the second exemplifying situation, the direct voltage U_{DC1} is assumed to be lower than the direct voltage U_{DC2}, and furthermore it is assumed that there is a need to transfer electrical energy from the capacitor system 102 to the capacitor system 103. In this exemplifying situation, the switch 109 is controlled to be bi-directionally conductive, i.e. the controllable semiconductor component of the switch 109 is controlled to be conductive, and the switching component 111 is controlled to be unidirectionally conductive, i.e. the controllable semiconductor component of the switching component 111 is controlled to be non-conductive. The switch 110 is controlled to be unidirectionally conductive, i.e. the controllable semiconductor component of the switch 110 is controlled to be non-conductive, and the switching component 112 is controlled to be in turn conductive in the direction from the second end of the inductive element 108 to the pole 106 and in turn non-conductive in the direction from the second end of the inductive element 108 to the pole 106. Therefore, in this exemplifying situation, the coupling circuit 104 is controlled to operate as a boost chopper that transfers electrical energy from the capacitor system 102 having the lower voltage U_{DC1} to the capacitor system 103 having the higher voltage U_{DC2}.

The controller 113 can be implemented with one or more processor circuits each of which can be a programmable processor circuit provided with appropriate software, a dedicated hardware processor such as for example an application specific integrated circuit "ASIC", or a configurable hardware processor such as for example a field programmable gate array "FPGA". Furthermore, the controller 113 may comprise one or more memory circuits. In the exemplifying case illustrated in figure 1 b, the currents of the controllable switches 109 and 110 and the voltages of the capacitor systems 102 and 103 are measured and the signals indicative of the measured currents and voltages are delivered to the controller 113 so as to enable to controller 113 to control the coupling circuit 104 in an appropriate way in each situation.

The specific examples provided in the description given above should not be construed as limiting the applicability and/or the interpretation of the appended claims. Lists and groups of examples provided in the description given above are not exhaustive unless otherwise explicitly stated.

## Claims

1. An intermediate circuit system (101) comprising:
- a first capacitor system (102) between a first pole (105) and a second pole (106),
- a second capacitor system (103) between a third pole (107) and the second pole, and
- a coupling circuit (104) between the first and third poles,
wherein the coupling circuit comprises an inductive element (108), a first controllable switch (109) between a first end of the inductive element and the first pole, and a second controllable switch (110) between the second end of the inductive element and the third pole, **characterized in that** the coupling circuit further comprises a first switching component (111) for conducting current from the second pole to the first end of the inductive element and a second switching component (112) for conducting current from the second pole to the second end of the inductive element.

2. An intermediate circuit system according to claim 1, wherein the first controllable switch (109) is controllable to be unidirectionally conductive in a direction from the inductive element to the first pole and controllable to be bi-directionally conductive in both directions between the inductive element and the first pole, and the second controllable switch (110) is controllable to be unidirectionally conductive in a direction from the inductive element to the third pole and controllable to be bi-directionally conductive in both directions between the inductive element and the third pole.

3. An intermediate circuit system according to claim 2, wherein the first controllable switch comprises a first diode having its forward direction from the inductive element to the first pole and a first controllable semiconductor component in parallel with the first diode, and the second controllable switch comprises a second diode having its forward direction from the inductive element to the third pole and a second controllable semiconductor component in parallel with the second diode.

4. An intermediate circuit system according to claim 3, wherein each of the first and second controllable semiconductor components is one of the following: an insulated gate bipolar transistor, a gate turn-off thyristor, a bipolar transistor, a field-effect transistor.

5. An intermediate circuit system according to any of claims 1-4, wherein the first switching component (111) is unidirectionally conductive in a direction from the second pole to the first end of the inductive element, and the second switching component (112) is unidirectionally conductive in a direction from the second pole to the second end of the inductive element.

6. An intermediate circuit system according to claim 5, wherein the first switching component is a diode having its forward direction from the second pole to the first end of the inductive element and the second switching component is a diode having its forward direction from the second pole to the second end of the inductive element.

7. An intermediate circuit system according to any of claims 1-4, wherein the first switching component (111) is controllable to be unidirectionally conductive in a direction from the second pole to the first end of the inductive element and controllable to be bi-directionally conductive in both directions between the first end of the inductive element and the second pole, and the second switching component (112) is controllable to be unidirectionally conductive in a direction from the second pole to the second end of the inductive element and controllable to be bi-directionally conductive in both directions between the second end of the inductive element and the second pole.

8. An intermediate circuit system according to claim 7, wherein the first switching component (111) comprises a third diode having its forward direction from the second pole to the first end of the inductive element and a third controllable semiconductor component in parallel with the third diode, and the second switching component (112) comprises a fourth diode having its forward direction from the second pole to the second end of the inductive element and a fourth controllable semiconductor component in parallel with the fourth diode.

9. An intermediate circuit system according to claim 8, wherein each of the third and fourth controllable semiconductor components is one of the following: an insulated gate bipolar transistor, a gate turn-off thyristor, a bipolar transistor, a field-effect transistor.

10. An intermediate circuit system according to any of claims 1-9, wherein the intermediate circuit system comprises a controller (113) adapted to control, in response to a need to transfer electrical energy from the first capacitor system to the second capacitor system having lower voltage than the first capacitor system, the first controllable switch to be in turn conductive in a direction from the first pole to the inductive element and in turn non-conductive in the direction from the first pole to the inductive element.

11. An intermediate circuit system according to any of claims 7-9, wherein the intermediate circuit system comprises a controller (113) adapted to control, in response to a need to transfer electrical energy from the first capacitor system to the second capacitor system having higher voltage than the first capacitor system, the first controllable switch to be conductive in a direction from the first pole to the inductive element and the second switching component to be in turn conductive in the direction from the second end of the inductive element to the second pole and in turn non-conductive in the direction from the second end of the inductive element to the second pole.

12. An electromechanical power transmission system comprising:
- one or more first generators (114, 115),
- one or more second generators (116),
- one or more first electric appliances (117) to be supplied with electrical power,
- one or more second electric appliances (118) to be supplied with electrical power,
- an intermediate circuit system (101) according to any of claims 1-11,
- first electric equipment (119) for transferring electrical power from the one or more first generators to the intermediate circuit system via the first and second poles of the intermediate circuit system,
- second electric equipment (120) for transferring electrical power from the one or more second generators to the intermediate circuit system via the third and second poles of the intermediate circuit system,
- third electric equipment (121) for transferring electrical power from the intermediate circuit system to the one or more first electric appliances via the first and second poles of the intermediate circuit system, and
- fourth electric equipment (122) for transferring electrical power from the intermediate circuit system to the one or more second electric appliances via the third and second poles of the intermediate circuit system.

13. An electromechanical power transmission system according to claim 12, wherein at least one of the first and second electric appliances (117, 118) comprises an electric motor (126, 127).

14. A ship comprising an electromechanical power transmission system according to claim 12 or 13.
